(19) Europäisches Patentamt
European Patent Office
Office européen des brevets

(11) Numéro de publication: **0 134 171**
**B1**

# (12) FASCICULE DE BREVET EUROPÉEN

(45) Date de publication du fascicule du brevet: **08.06.88**

(51) Int. Cl.⁴: **G 01 N 27/56**

(21) Numéro de dépôt: **84401598.2**

(22) Date de dépôt: **31.07.84**

## (54) Jauge à oxygène dont l'électrode de travail comporte un composé macrocyclique pyrrolique.

(30) Priorité: **03.08.83 FR 8312799**

(43) Date de publication de la demande:
**13.03.85 Bulletin 85/11**

(45) Mention de la délivrance du brevet:
**08.06.88 Bulletin 88/23**

(84) Etats contractants désignés:
**DE GB NL**

(56) Documents cité:
**EP-A-0 056 283**
**EP-A-0 082 518**
**FR-A-2 364 449**
**FR-A-2 383 440**
**US-A-3 999 122**

(73) Titulaire: **SOCIETE NATIONALE ELF AQUITAINE, Tour Aquitaine, F-92400 Courbevoie (FR)**

(72) Inventeur: **Fouletier, Mireille, 2 Rue Auguste Ravier, F-38100 Grenoble (FR)**
Inventeur: **Siebert, Elisabeth, 22 Rue de Turenne, F-38000 Grenoble (FR)**
Inventeur: **Le Moigne, Jacques, 24 Rue Cuvier, F-67000 Strasbourg (FR)**

(74) Mandataire: **Ohresser, François, Société Nationale Elf Aquitaine Division Proprieté Industrielle Tour Elf, F-92078 Paris La Défense Cédex 45 (FR)**

**EP 0 134 171 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

L'invention concerne un perfectionnement aux jauges à oxygène. Le principe des jauges à oxygène est bien connu de l'homme de l'art et on rappelera qu'il repose essentiellement sur l'utilisation d'une électrode de référence, d'un électrolyte conducteur ionique et d'une électrode de travail, sensible à la pression partielle de l'oxygène.

Le capteur ou jauge le plus répandu, met en jeu le dioxyde de zirconium $ZrO_2$ dopé par l'oxyde d'yttrium, $Y_2O_3$ ou l'oxyde de calcium, CaO. La température de fonctionnement de la cellule est supérieure à 400° C en raison de la faible conductivité de cette solution solide à basse température. L'utilisation d'autres solutions solides à base d'oxyde de cérium, $CeO_2$ ou d'oxyde de bismuth, $Bi_2O_3$, a été envisagée. Cependant, en dessous de 400° C, le temps de réponse du capteur (c'est-à-dire le temps nécessaire pour que la f.e.m. du capteur devienne, après modification de la pression d'oxygène du gaz, égale à la f.e.m. théorique à 50 % près ($t_{50}$) ou à 90 % près ($t_{90}$), par exemple) devient très élevé. D'autre part, la conductivité électronique de ces oxydes est importante en présence d'un gaz réducteur un tel électrolyte ne peut être envisagé que pour mesurer des teneurs en oxygène supérieures à 1 %.

Pour remédier à ces inconvénients, on a proposé un électrolyte solide conducteur principalement par d'autres ions que les ions oxyde. Des électrolytes solides conducteurs anioniques (chlorures, fluorures), synthétisés au cours des dernières années présentent une conductivité suffisante à température ordinaire. L'utilisation du fluorure mixte de plomb et d'étain, $PbSnF_4$, a été proposé dans la demande de brevet français N° 2.486.244. Dans une autre demande de brevet français N° 25 31 222 (correspondant à EP-A-0 102 880, publié le 14.03.84.) "Dispositif électrochimique de mesure de la pression partielle en oxygène dans une atmosphère gazeuse ou liquide", on a proposé de dissoudre dans le fluorure mixte de plomb et d'étain des ions peroxyde, par exemple, à raison de 0,5 % de peroxyde de baryum, $BaO_2$. Le temps de réponse du capteur a pu être ainsi notablement diminué. Cependant, la température de fonctionnement du capteur ne peut être inférieure à 150° C, en raison d'une augmentation prohibitive du temps de réponse du capteur.

La présente invention a pour but de permettre la réalisation de jauges à oxygène utilisables à des températures inférieures à 150° C, notamment inférieures à 100° C, et présentant d'excellents temps de réponse.

Pour cela, elle prévoit une jauge à oxygène du type précité dans laquelle l'électrode de travail est constituée, au moins en partie, par un matériau macrocyclique tétrapyrrolique.

Le matériau macrocyclique peut être choisi parmi les porphyrines représentées par la formule I :

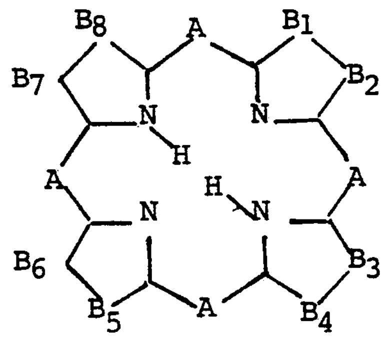

(I)

Les groupes $B_1$ à $B_8$, qui peuvent être identiques ou différents, représentent chacun H ou un groupe méthyl ou éthyl.

A peut représenter l'azote et on a dans ce cas affaire à des tétra-azoporphyrines. Mais A peut représenter C-H, ou un groupe C-phényl.

Des tétra-azoporphyrines particulièrement adaptées à la réalisation de l'invention sont représentées par la formule II :

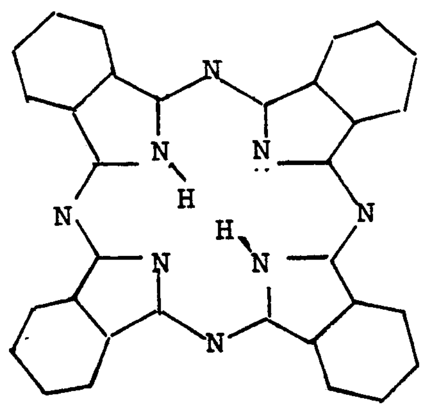

(II)

Ces dérivés correspondent aux dérivés de la formule I dans lequels les positions des radicaux $B_1$ à $B_8$ sont occupées deux par deux par des cycles benzéniques condensés sur le cycle pyrrolique.

Parmi ces dérivés, on utilisera particulièrement ceux obtenus par substitution des protons par un halogène (chlore ou fluore) ou par condensation de cycles benzéniques (naphtophalocyanine).

De préférence, le matériau macrocyclique est un complexe métallique, choisi parmi les complexes du fer, nickel ou cobalt.

L'intérêt de l'électrode de travail selon la présente invention tient au fait que les matériaux macrocycliques tétrapyrroliques présentent d'excellentes propriétés de catalyseur vis-à-vis de la réduction de l'oxygène dès la température ordinaire.

En particulier, dans le cas des complexes métalliques, la structure électronique de l'atome central est un paramètre important pour les propriétés catalytiques.

Selon une caractéristique complémentaire, l'électrolyte est un fluorure mixte de plomb et d'étain dopé au peroxyde de baryum dans lequel le peroxyde est dissous à raison de 0,5 %. Un tel électrolyte est décrit dans la demande de brevet 82 13473.

Selon une autre caractéristique, le matériau d'électrode de référence est un mélange d'étain et de fluorure d'étain en contact avec l'électrolyte et isolé de l'atmosphère ambiante à l'aide d'une résine étanche.

Le matériau d'électrode selon l'invention peut être synthétisé par toute méthode connue. On pourra par exemple synthétiser les phtalocyanines à partir de phtalonitrile et d'un sel métallique, soit à partir de phtalonitrile et d'un métal carbonyl dans un solvant à haut point d'ébullition.

Les avantages et autres caractéristiques de l'invention apparaîtront plus clairement à la lumière de la description suivante, faite en référence aux dessins annexés dans lesquels :

- la figure 1 représente une jauge à oxygène selon l'invention
-la figure 2 représente la variation de la force électromotrice de la jauge en fonction du logarithme de la pression partielle en oxygène pour une température de 141°C,
-la figure 3 représente la même variation pour une température de 94°C,
- la figure 4 représente les temps de réponse pour 94°C.

On a représenté sur la figure 1 une jauge à oxygène réalisée selon l'invention. Elle comporte essentiellement une pastille d'électrolyte solide (1), une électrode de référence (2) et une électrode de travail (3). L'électrode de référence est isolée par une résine étanche (4). L'électrolyte, sous forme de poudre et le mélange de référence sont pressés simultanément à la température ambiante sous une pression de 2 tonnes par $cm^2$, de façon à former deux couches d'une même pastille. Des fils de platine (7) et (8) insérés dans des capillaires d'alumine (5) et (6) servent d'amenées de courant. La température est mesurée par la sonde de platine (9), placée au voisinage de la jauge. L'ensemble est placé dans un tube à fond fermé (10) en verre pyrex, balayé par un flux constant du gaz à analyser.

On décrit ci-dessous la préparation d'une électrode de travail réalisée en phtalocyanine de fer.

La phtalocyanine de fer est préparée avec un bon rendement en suivant la méthode proposée par E. Meloni, L. Ocone et B. Block (Inorg. Chem 6, 424 (1967). Une solution de 8,0 g de phtalonitrile dans 100 ml de 1-chloronaphtalène est chauffée sous reflux avec agitation et sous courant d'azote. 3 g de $Fe(CO)_5$ en solution dans 50 ml de 1-chloronaphtalène sont lentement ajoutés à la solution précédente. Le reflux est poursuivi pendant 30 min environ après addition complète du $Fe(CO)_5$. Le mélange refroidi est filtré et le produit insoluble est lavé au benzène, chloroforme, acétone et éther anhydre. Un rendement de 63 % est obtenu. La phtalocyanine est ensuite purifiée par sublimation sous courant d'azote.

Le dépôt de phtalocyanine sur la pastille électrolyte solide est obtenu par évaporation sous vide. La sublimation s'effectue dans une enceinte sous vide comportant un support pour les pastilles d'électrolyte solide et un creuset en tantale contenant le matériau d'électrode. Les pastilles sont dégazées au moins douze heures avant la sublimation pour que le vide atteigne $10^{-4}$ Pa. La vitesse de dépôt est de quelques A° par seconde. La couche déposée a une épaisseur de 1200 A°.

On a testé une jauge à oxygène selon l'invention qui avait les caractéristiques suivantes. L'électrolyte était un fluorure mixte de plomb et d'étain contenant 0,5 % de peroxyde de baryum, le matériau d'électrode de référence était un mélange d'étain et de fluorure d'étain en contact avec l'électrolyte et isolé de l'atmosphère ambiante à l'aide d'une résine étanche.

L'électrode de travail était celle dont on a décrit plus haut la fabrication, c'est-à-dire une phtalocyanine de fer.

Pour effectuer les tests, on a balayé le tube à fond fermé (10) par différents mélanges argon-oxygène.

On a représenté sur la figure 2 la variation de la f.e.m. en fonction du logarithme de la pression partielle d'oxygène, pour une température de 141°C. On remarque sur la figure 2 que la relation linéaire est bien suivie jusqu'à $10^{-4}$ atmosphère d'oxygène, ce qui représente une nette amélioration par rapport aux dispositifs de l'art antérieur pour lesquels la relation linéaire n'était plus vérifiée pour des pressions d'oxygène inférieures à $10^{-3}$ atmosphère. La pente de la droite obtenue correspond à la pente théorique, soit 41 mV/décade.

On a représenté sur la figure 3, la variation de la f.e.m. du capteur en fonction du logarithme de la pression partielle d'oxygène pour une température de 94°C pour cette température, on remarque que la jauge répond à la pression partielle d'oxygène selon la loi théorique pour des pressions partielles supérieures à $10^{-2}$ atmosphère environ. La pente de la droite est de 36 mV par décade. Avec les dispositifs antérieurs et en dessous de 100°C, aucune variation significative de la f.e.m. du capteur n'était obtenue.

Enfin, on a représenté sur la fig. 4 la réponse du capteur après modification de la pression partielle

d'oxygène, pour une température de 94° C. Le temps de réponse ($t_{50}$) est de 15 min pour une modification de la pression de $10^{-2}$ à $10^{-1}$ atmosphère, de 1 min pour une modification de 0,2 à 1 atmosphère de 6 min pour une modification de 0,1 à 0,2 atmosphère.

Mais l'invention n'est pas limitée aux modes de réalisation décrits, elle en englobe au contraire toutes les variantes, tant pour le choix des matériaux que pour celui des synthèses.

## Revendications

1. Dispositif électrochimique de mesure de la concentration en oxygène d'un milieu gazeux, comprenant une électrode de travail sensible à l'oxygène, une électrode de référence constituée par un gaz ou un solide ou un mélange de solides et un électrolyte solide conducteur ionique, caractérisé en ce que l'électrode de travail est constituée au moins en partie par un matériau macrocyclique tétrapyrrolique.

2. Dispositif électrochimique selon la revendication 1, caractérisé en ce que le matériau macrocyclique tétrapyrrolique est une porphyrine représentée par la formule I :

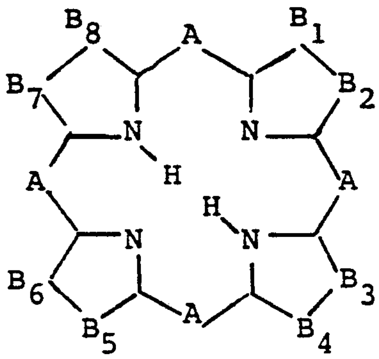

(I)

dans laquelle A représente N ou C-H ou un groupe c-phényl, $B_1$ à $B_8$, identiques ou différents, représentent chacun H ou un groupe méthyl ou éthyl.

3. Dispositif électrochimique selon la revendication 1, caractérisé en ce que le matériau macrocyclique est une tétraazatétrabenzoporphyrine ou phtalocyanine représentée par la formule II :

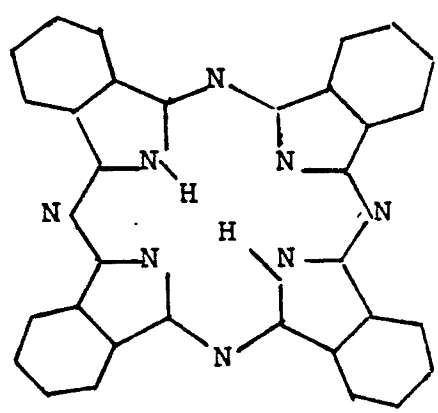

(II)

4. Dispositif électrochimique selon la revendication 3, caractérisé en ce que le matériau macrocyclique est un dérivé du composé représenté par la formule II obtenu par substitution des protons par un halogène choisi parmi le chlore ou le fluore ou par condensation de cycles benzéniques.

5. Dispositif selon l'une des revendications précédentes, caractérisé en ce que le matériau macrocycliques se présente sous forme d'un complexe métallique.

6. Dispositif selon la revendication 5, caractérisé en ce que le métal du complexe est choisi parmi le nickel, le cobalt ou le fer.

**Patentansprüche**

1. Elektrochemische Bestimmungsvorrichtung der Sauerstoffkonzentration in einem Gasmedium mit einer sauerstoffempfindlichen Arbeitselektrode, einer Bezugselektrode aus einem Gas, einem Feststoff oder einem Feststoffgemisch und einem festen, Ionen leitenden Elektrolyten,
dadurch gekennzeichnet,
daß die Arbeitselektrode zumindest teilweise aus einem makrozyklischen Tetrapyrrol-Material besteht.
2. Elektrochemische Vorrichtung nach Anspruch 1,
dadurch gekennzeichnet,
daß das makrozyklische Tetrapyrrol-Material ein Porphyrin der allgemeinen Formel I ist:

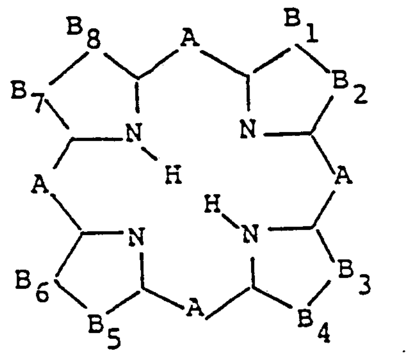

(I)

in der A N, CH oder C-Phenyl, $B_1$ bis $B_8$, gleich oder verschieden, je H, Methyl oder Ethyl sind.
3. Elektrochemische Vorrichtung nach Anspruch 1,
dadurch gekennzeichnet,
daß das makrozyklische Material ein Tetraazatetrabenzoporphyrin oder Phtalocyanin der Formel II ist:

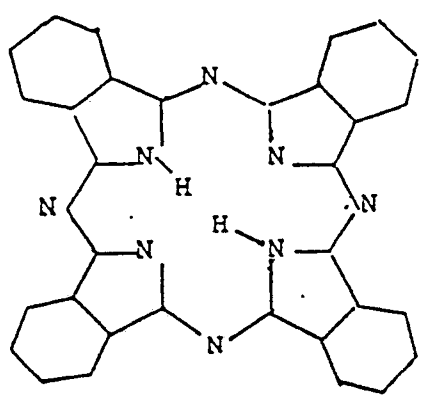

(II)

4. Elektrochemische Vorrichtung nach Anspruch 3,
dadurch gekennzeichnet,
daß das makrozyklische Material ein Derivat der Verbindung der Formel II ist, das durch Substitution der Protonen durch Halogen, ausgewählt unter Chlor oder Fluor, oder durch Kondensation der Benzolringe erhältlich ist.
5. Vorrichtung nach einem der vorstehenden Ansprüche,
dadurch gekennzeichnet,
daß das makrozyklische Material in Form eines Metallkomplexes vorliegt.
6. Vorrichtung nach Anspruch 5,
dadurch gekennzeichnet,
daß der Metallkomplex unter Nickel, Kobalt oder Eisen ausgewählt wird.

**Claims**

1. An electrochemical device for measuring the oxygen concentration in a gaseous environment, comprising an oxygen-sensitive working electrode, a reference electrode constituted by a gas or a solid or a mixture of

solids and a solid ionic conductive electrolyte, characterised in that the working electrode is constituted, at least in part, by a macrocyclic tetrapyrrolic material.

2. An electrochemical device according to Claim 1, characterised in that the macrocyclic tetrapyrrolic material is a porphyrin represented by the Formula I:

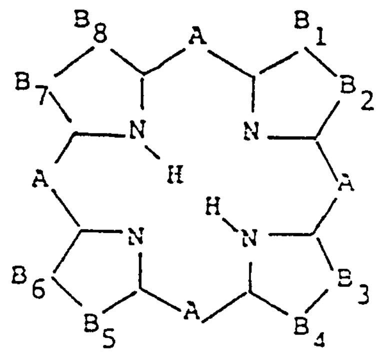

(I)

in which A represents N or CH or a c-phenyl group, and $B_1$ to $B_8$ are identical or different and each represents H or a methyl or an ethyl group.

3. An electrochemical device according to Claim 1, characterised in that the macrocyclic material is a tetraazatetrabenzoporphyrin or phthalocyanine represented by Formula II:

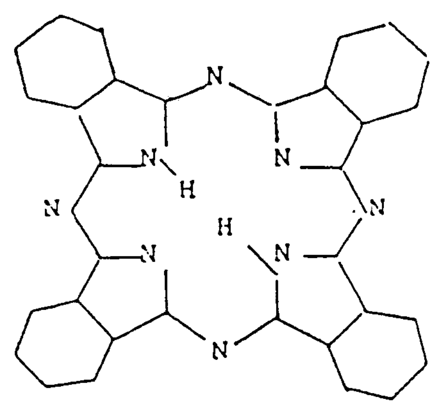

(II)

4. An electrochemical device according to Claim 3, characterised in that the macrocyclic material is a derivative of the compound represented by the Formula II obtained by substitution of the protons by a halogen selected from chlorine and fluorine or by condensation of benzene rings.

5. A device according to one of the preceding claims, characterised in that the macrocyclic material is in the form of a metallic complex.

6. A device according to Claim 5, characterised in that the metal of the complex is selected from nickel, cobalt and iron.

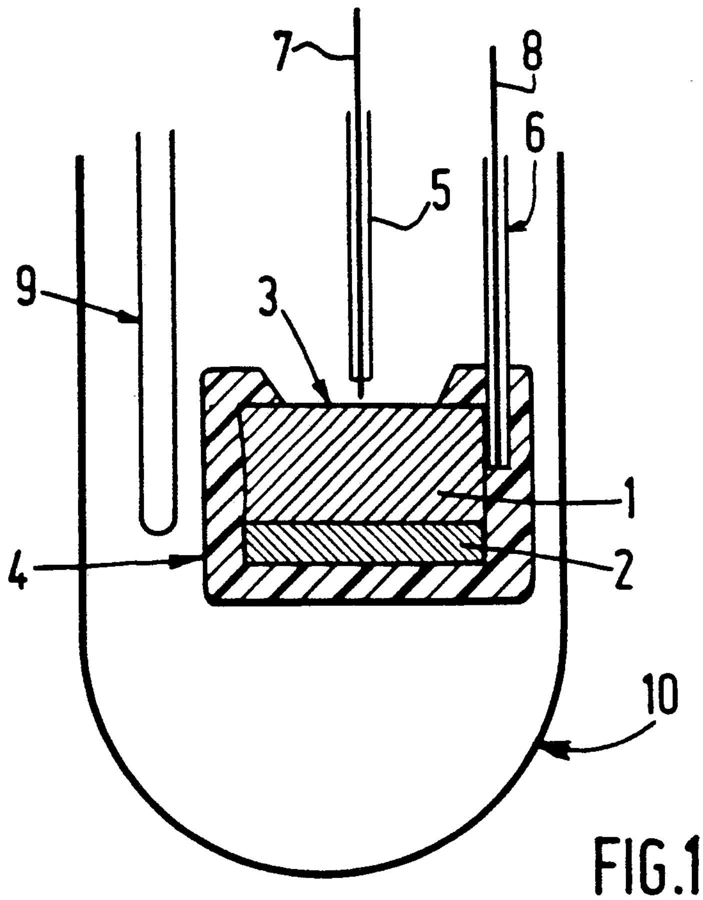
7
8
6
5
9
3
1
2
4
10

FIG.1

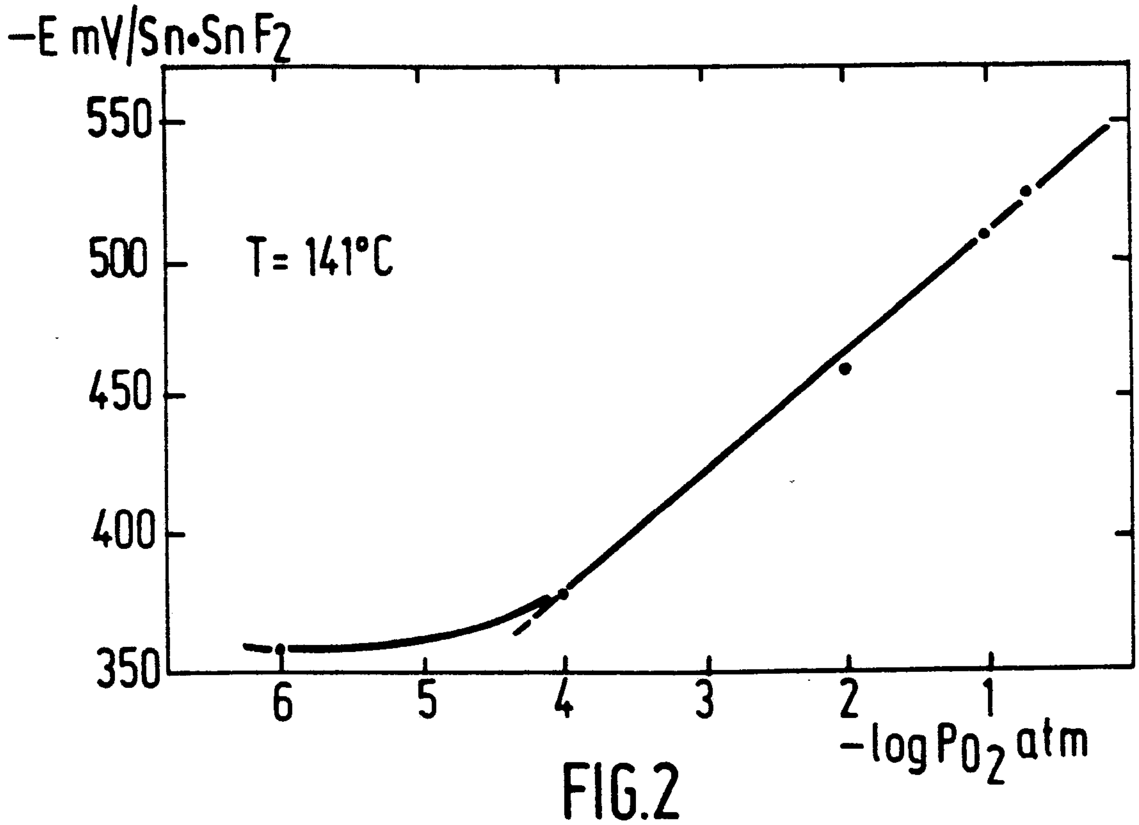
-E mV/Sn•SnF2
550
500
450
400
350
T= 141°C
6
5
4
3
2
1
-log PO2 atm

FIG.2

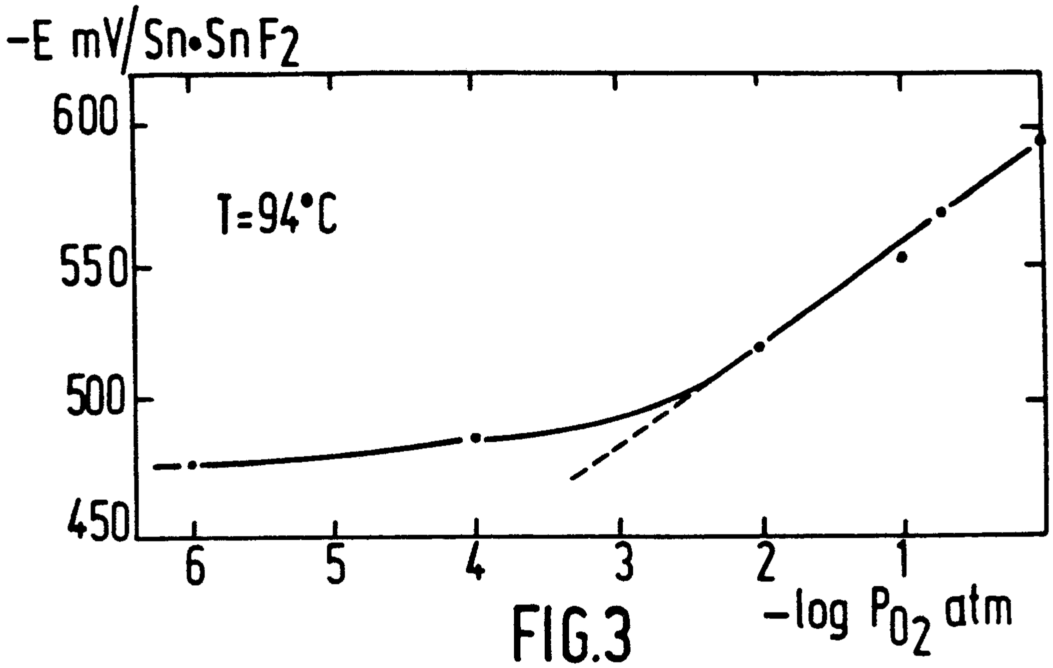
-E mV/Sn•SnF2
600
550
500
450
T=94°C
6
5
4
3
2
1
-log PO2 atm

FIG.3

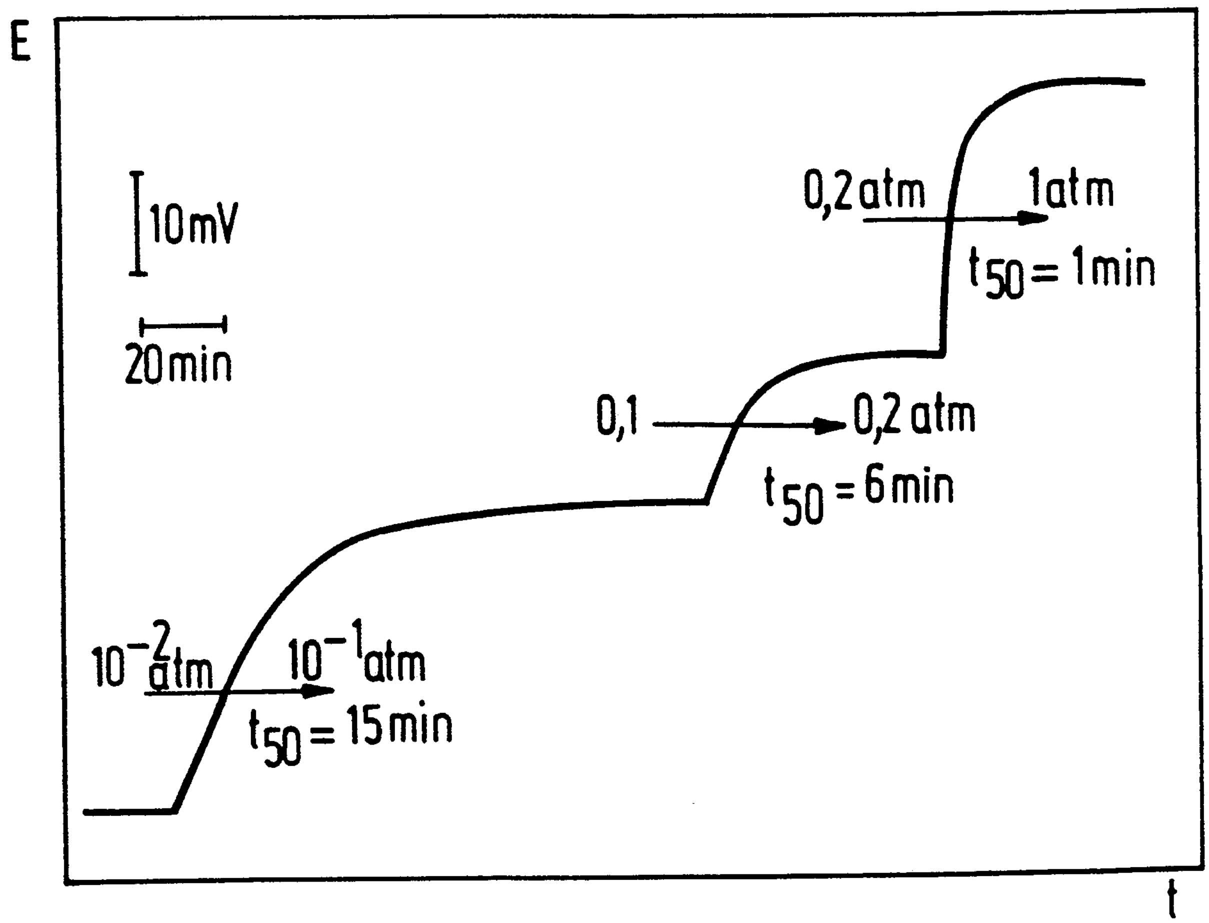
E
10mV
20min
10-2 atm
10-1 atm
t50 = 15 min
0,1
0,2 atm
t50 = 6 min
0,2 atm
1atm
t50 = 1min
t

FIG.4